# EUROPÄISCHE PATENTSCHRIFT

(11) **EP 0 803 274 B1**
(45) Veröffentlichungstag und Bekanntmachung des Hinweises auf die Patenterteilung: **24.09.2003**
(21) Anmeldenummer: 96119824.9
(22) Anmeldetag: 11.12.1996
(51) Int. Cl.: B01D 36/04, B01D 61/14, C02F 1/44

(54) **Verfahren und Vorrichtung zur Aufbereitung von Filterrückspülwasser**
Process and apparatus for treatment of backwash water from a filter
Procédé et appareil pour le traitement de l'eau provenant du lavage à contre-courant d'un filtre

(30) Priorität: 26.04.1996 DE 19616763
(43) Veröffentlichungstag der Anmeldung: 29.10.1997
(73) Patentinhaber: VA TECH WABAG Deutschland GmbH & Co. KG, 88212 Ravensburg (DE)
(72) Erfinder: Hagen, Klaus, Dr., 95326 Kulmbach (DE); Mende, Ulrich, 95326 Kulmbach (DE)
(74) Vertreter: VA TECH Patente GmbH & Co

(56) Entgegenhaltungen:
- EP-A- 0 537 516
- EP-A- 0 662 341
- WO-A-88/03829
- WO-A-91/05601
- GB-A- 2 272 171
- US-A- 5 248 424
- JOURNAL OF MEMBRANE SCIENCE, Bd. 91, Nr. 1/2, 20.Mai 1994, AMSTERDAM NL, Seiten 135-143, XP000490086 LEVY P.F. , EARLE R.S.: "The effect of channel height and spacers on flux and energy requirements in crossflow filtration"
- DATABASE WPI Week 7907 Derwent Publications Ltd., London, GB; AN 79-12710B XP002037422 & JP 54 001 271 A (ISE KAGAKU KOGYO KK) , 8.Januar 1979

## Beschreibung

Die Erfindung betrifft ein Verfahren und eine Vorrichtung zur Aufbereitung von Filterrückspülwasser aus Filteranlagen zur Reinigung von Trinkwasser oder Abwasser nach dem Oberbegriff der Ansprüche 1 und 8.

Je nach Aufbereitungsverfahren und Rohwasserbeschaffenheit entspricht die Menge des Filterrückspülwassers ca. 0,5 - 6 % der zu filternden Wassermenge. Die Inhaltsstoffe reichen von organischer und anorganischer Belastung durch z.B. Algen und Phosphat bei Oberflächenwasser oder Klärschlamm bei der Filtration von Kläranlagenablauf über Eisen und Mangan bei der Aufbereitung von Grundwässern bis hin zu Arsen, welches in der Trinkwasseraufbereitung ebenfalls aus dem Rohwasser zu entfernen ist.

Aus der US-PS 37 92 773 sowie aus der EP 537 516 A1 ist ein Verfahren zum Rückspülen einer Filtereinheit bekannt, bei dem das Filterrückspülwasser der Klarphase der Filtereinheit entnommen wird. Das bei der Rückspülung der Filtereinheit anfallende, die Filterrückstände enthaltende Filterrückspülwasser wird einem Sedimentationstank zugeführt. In dem Sedimentationstank wird das Filterrückspülwasser in einen Schlammanteil, der die Filterrückstände enthält, und in eine Klarphase getrennt. Die Klarphase aus dem Sedimentationstank wird in das System vor der Filtereinheit zurückgeführt.

Bei dem aus der DE-OS 30 00 503 bekannten Verfahren zur Rückspülung eines Sand- oder Kohlefilters wird das Filterrückspülwasser in einem Haltetank bereitgehalten. Nach dem Rückspülen des Filters wird das mit den Filterrückständen beladene Filterrückspülwasser zur erneuten Verwendung als Rückspülwasser in einem Rückwaschfilter und einer sich daran anschließenden Nachbehandlungseinrichtung aufbereitet.

Im Zusammenhang mit der Behandlung von kommunalem Abwasser mittels Belebtschlamm ist ein Verfahren bekannt (EP-PS 510 328), das einen Behälter verwendet, in dem unterhalb der Wasseroberfläche Filtermembranmodule angeordnet sind. Die Filtermembranmodule werden zur Sauerstoffversorgung des Belebtschlammes mit Sauerstoff von Luft umspült. In den Filtermembranen wird das den Belebtschlamm enthaltende Wasser in flüssige und feste Bestandteile getrennt.

Aus der US 5 248 424 A ist ein Verfahren bekannt, bei welchem Trinkwasser in einem Klärbehälter in eine wässrige und eine die Rückstände aus der Filteranlage enthaltende Phase zerlegt wird und die wässrige Phase über im Klärbehälter eingetauchte Membranfilter geführt wird.

Das Klarwasser aus der Nachbehandlung des Filterrückspülwassers kann mit den bekannten Verfahren nicht ohne weiters dem Trinkwasser zugefügt werden, da nicht alle Inhaltsstoffe des Filterrückspülwassers zuverlässig über die Sedimentation abgetrennt werden können. Das Klarwasser kann auch nicht ohne weiteres dem Rohwasser zufügt werden, da eine Beeinflussung des Klarwassers durch biologische Vorgänge bei der Sedimentation und Eindickung nicht ausgeschlossen werden kann. Das Klarwasser kann dann nicht als Filterrückspülwasser einsetzt werden, wenn biologische Vorgänge während der Sedimentation auftreten, da diese im Kreislauf geführt werden und zu einer unerwünschten Anreicherung auch von gelösten Schadstoffen führen können. Eine weitergehende Filtration des Klarwassers kann wegen der biologischen Vorgänge dazu führen, daß auch der Klarwasserfilter allmählich biologisch aktiv wird, und damit dessen Filtrat nicht mehr unbedenklich zu verwenden ist. Außerdem würde auch dieser Filter Filterrückspülwasser erzeugen.

Die Entsorgung des Dünnschlammes, der bei der Sedimentation entsteht, kann zum Teil über die Kläranlage erfolgen. Dort wo dies nicht möglich ist, muß eine Schlammbehandlung durchgeführt werden, die in der statischen Eindickung des Dünnschlammes und eventuell auch einer mechanischen Schlammbehandlung mittels Filterpressen oder Dekanter besteht. Die statische Eindickung erfordert speziell konstruierte Behälter mit großen Tiefen, evtl. Einsatz von Krählwerken zur mechanischen Eindickung und entsprechende Aufenthaltszeiten. Zusätzlich dazu, daß die statische Eindickung je nach abgetrenntem Wasserinhaltsstoff nur unzureichend funktioniert, kann eine lange Aufenthaltszeit des Schlammes zu unkontrollierten biologischen Vorgängen im Bereich der Schlammeindick- und -speicherzone führen. Dieses wird eine Wiederverwendung der Klarwasserphase erschweren. Auch dort, wo die Absetzung augenscheinlich gut funktioniert, ist immer noch ein hoher Anteil an kolloiddispersen Bestandteilen in der Klarwasserphase zu finden, der ebenfalls eine Wiederverwendung einschränken kann.

Die statische Eindickung erreicht bisweilen keine sehr hohen Trockensubstanzgehalte im Schlamm. Infolgedessen werden entweder die Behälter sehr groß oder die zu entsorgende Dünnschlammmenge bleibt hoch. Die Nachteile langer Verweilzeiten sind.bereits genannt. Die Entsorgungskosten für dünnen Schlamm sind bekanntermaßen hoch, auch wenn die Benutzung eines öffentlichen Kanals für den Dünnschlamm zur Verfügung steht. Ist kein Kanalanschluß vorhanden, so bleibt nur die kontinuierliche Abfuhr des Dünnschlammes oder die Speicherung für eine Schlammbehandlung zur Auswahl.

Der Erfindung liegt die Aufgabe zugrunde, die Aufbereitung von Filterrückspülwasser so zu gestalten, daß die zu entsorgende Menge an Wasser und Schlamm gering gehalten werden kann.

Diese Aufgabe wird bei einem gattungsgemäßen Verfahren erfindungsgemäß durch die kennzeichnenden Merkmale des Anspruches 1 gelöst. Eine Vorrichtung zur Lösung der Aufgabe ist Gegenstand des Anspruchs 8. Vorteilhafte Ausgestaltungen sind in den Unteransprüchen angegeben.

Durch den Einsatz der Membranfilter läßt sich aus dem Filterrückspülwasser ein Klarwasser erzeugen, das bakteriologisch einwandfrei ist und somit unbedenklich wieder verwendet werden kann. Gleichzeitig ermöglichen die Membranfilter durch die Aufkonzentration des anfallenden Konzentrats eine Verringerung des zu entsorgenden Dünnschlammvolumens. Dabei kann eine aerobe Schlammstabilisierung durchführt werden, die die abbaubaren Kohlenstoffverbindungen reduziert und eine weitere Verminderung des zu entsorgenden Schlammes bewirkt.

Es erfolgt die aerobe Schlammstabilisierung mit Hilfe der getauchten Mikrofiltrationsmodule, da diese mit einem Luft- oder Sauerstoffgasstrom betrieben werden, der im Innern des Moduls für eine Strömung und dadurch für einen Cross-Flow entlang der Membranen sorgt.

Durch Kombination verschiedener Membranmodule wird die Möglichkeit geschaffen, das gesamte Filterrückspülwasser aufzubereiten und zurückzugewinnen. Hierbei werden Mikrofiltrations- oder Ultrafiltrationsanlagen eingeschaltet, die das zunächst dünne gespeicherte Filterrückspülwasser im Dead-End Modus aufkonzentrieren. Gleichzeitig erfolgt eine Eindickung mit Hilfe von anders betriebenen Membransystemen wie z.B. den getauchten Mikrofiltrationsmembranen oder über im Cross-Flow betriebenen nicht getauchte Membrananlagen.

Mehrere Ausführungsbeispiele sind in der Zeichnung dargestellt und werden im folgenden näher erläutert. Es zeigen:

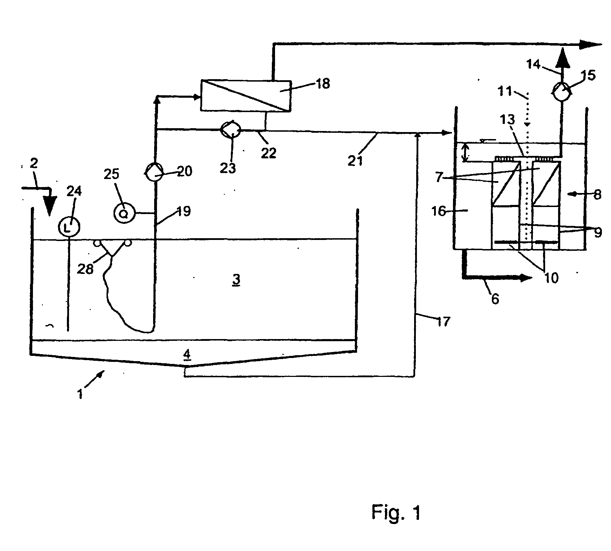

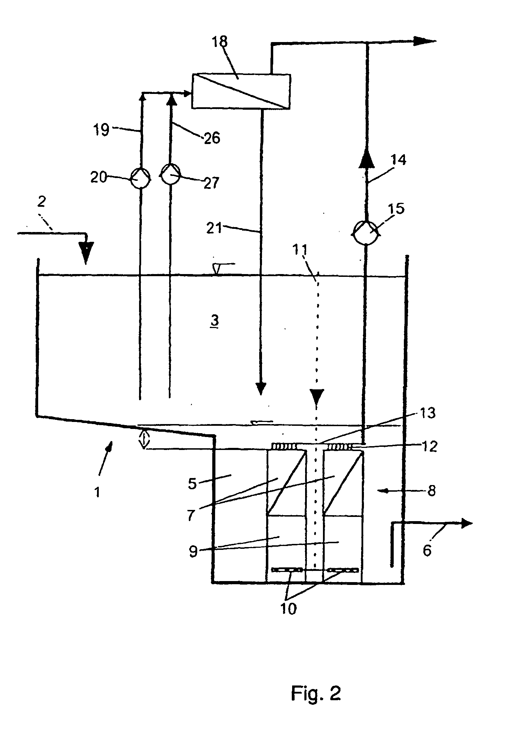

Fig. 1 und 2 zeigen schematisch einen Querschnitt durch verschiedene Ausführungsformen eines Klärbehälters zur Behandlung von Filterrückspülwasser.

In einer nicht gezeigten Filteranlage wird Trink- oder Abwasser gereinigt. Diese Filteranlage wird zur Regeneration der Filter periodisch mit Filterrückspülwasser gespült. Das Filterrückspülwasser nimmt dabei die in der Filteranlage abgetrennten Filterrückstände auf. Das mit den Filterrückständen beladene Filterrückspülwasser wird zur Aufbereitung einem Klärbehälter 1 zugeführt.

Der Klärbehälter 1 ist mit einem Zulauf 2 für das Filterrückspülwasser versehen und weist eine Speicherzone 3 und einen Absetzbereich 4 (Fig. 1) bzw. einen Schlammsammelbereich 5 (Fig 2) auf. Die Speicherzone 3 ist so groß bemessen, daß sie die gesamte Menge des Filterrückspülwassers aus einem Rückspülvorgang der Filteranlage aufnehmen kann. Der Klärbehälter 1 ist im Schlammsammelbereich 5 mit einem Auslaß zur Entnahme von Schlamm versehen.

Der in Fig. 2 dargestellte Klärbehälter 1 hat einen Schlammsammelbereich 5 von einer solchen Höhe, daß in dem Schlammsammelbereich 5 mehrere Module eines Membranfilters 8 angeordnet sind. Die Membranfilter 8 enthalten Wickel-, Kapillar-, Platten- oder Rohrmodule mit freien Kanalöffnungen von 0,8 bis 6 mm bei einer Filterfeinheit von <= 0,4 µm.

Die Membranen des Membranfilters 8 sind in das zu behandelnde Medium eingetaucht, wobei oberhalb der Membranen eine Mindesthöhe des Mediums von etwa 0,3 m eingehalten wird. Die Module 7 des Membranfilters 8 sind in einem Gehäuse 9 angeordnet, in dessen unterem Teil ein Luftverteiler 10 sich befindet, der mit einer Luftzuführung 11 versehen ist. Die aufsteigende Luft erzeugt eine Strömung des Mediums entlang den Membranen. An jede Membran ist eine Permeatleitung 12 angeschlossen, die zu einer Sammelleitung 13 geführt sind. Die Sammelleitung 13 ist mit einer Abführleitung 14 verbunden, in der eine Saugpumpe 15 angeordnet ist.

In dem Membranfilter 8 wird das Filterrückspülwasser in Klarwasser und Konzentrat zerlegt. Dabei wird das Filterrückspülwasser der Speicherzone 3 oberhalb des Membranfilters 8 in der Zeit zwischen zwei Spülzyklen der Filteranlage vollständig bis zu einem Mindestfüllstand entfernt. Gleichzeitig wird das anfallende Konzentrat zunehmend aufkonzentriert. Durch das Einblasen der Luft wird das Konzentrat je nach Beschaffenheit noch auf biologischem Wege weiter behandelt, indem eine aerobe Schlammstabilisierung stattfindet. Nach Erreichen der maximalen Konzentration der Trockensubstanz zum Beispiel von 20 bis 40 g/l wird das Konzentrat als eingedickter Schlamm über den Auslaß entfernt. Der Schlamm ist zu entsorgen oder einer Nachbehandlung zuzuführen.

Das in dem Membranfilter 8 filtrierte Klarwasser ist im Falle der Mikrofiltration mit einem Trennbereich von <= 0,4 µm bakteriologisch unbedenklich, weil bei dieser Trenngrenze Bakterien, Keime und Parasiten sicher zurückgehalten werden. Eine Rückhaltung für Viren kann einerseits durch die Adsorption an dem zurückgehaltenen Feststoff und andererseits durch den Einsatz von Ultrafiltrationsmembranen mit einer Trenngrenze von <= 0,1 µm erfolgen. Das gewonnene Klarwasser ist auch feststofffrei. Es kann unmittelbar gebraucht werden und dem in der Filteranlage gewonnenen Reinwasser zugegeben werden. Es kann auch nach einer Zwischenspeicherung als Filterrückspülwasser verwendet werden. Ist eine solche Verwendung aus betrieblichen Gründen nicht möglich, kann das Klarwasser auch vor der Filteranlage oder dem Rohwasser zugemischt werden. Die Ableitung in den Vorfluter kann bedenkenlos erfolgen.

Der in Fig. 2 gezeigte Klärbehälter 1 wird bevorzugt für Neuanlagen eingesetzt. Wenn ein bereits vorhandener Klärbehälter 1 zwar keine genügende Höhe für die Unterbringung der getauchten Membranfilter 8 bietet, aber noch ausreichend Speicherkapazität aufweist, um das gesamte Filterrückspülwasser zwischen zwei Spülzyklen aufzunehmen, wird die Ausführungsform gemäß Fig. 1 gewählt. In diesem Fall ist das Membranfilter 8 in einem getrennten Behälter 16 untergebracht. Dieser Behälter 16 ist mit dem Klärbehälter 1 über eine Leitung 17 verbunden, die von dem Absetzbereich 4 des Klärbehälters 1 ausgeht. Der Auslaß für den Schlamm ist an dem getrennten Behälter 16 vorgesehen. Im übrigen ist das Membranfilter 8 in der gleichen Weise aufgebaut, wie er im Zusammenhang mit dem Klärbehälter 1 gemäß Fig. 2 beschrieben ist.

In Verbindung mit dem beschriebenen getauchten Membranfilter 8 werden separate, nicht getauchte Membranfiltereinheiten eingesetzt. Diese separaten Membranfiltereinheiten enthalten ebenfalls Wickel-, Kapillar-, Platten- oder Rohrmodule mit freien Kanalöffnungen von 0,8 bis 6 mm bei einer Filterfeinheit von <= 0,4 µm. Sie liegen hinter dem Klärbehälter 1 und sind, wenn getauchte Membranfilter 8 eingesetzt sind, diesen vorgeschaltet.

Bei der in Fig. 1 dargestellten Ausführungsform führt eine Leitung 19, in der eine Pumpe 20 angeordnet ist, aus der Speicherzone 3 des Klärbehälters 1 zu dem Eingang der Membranfiltereinheit 18. Auf der Wasseroberfläche schwimmt ein Wasserabzug 28, der über einen Schlauch mit der Leitung 19 verbunden ist. Auf diese Weise wird einerseits der Sedimentationsvorgung in dem Klärbehälter möglichst wenig gestört, und andererseits wird der Membranfiltereinheit 18 der Teil des Filterrückspülwassers zugeführt, der am weitesten von Feststoffen befreit ist.

Der konzentratseitige Ausgang der Membranfiltereinheit 18 ist über eine Konzentratleitung 21 mit dem die getauchten Membranfilter 8 aufnehmenden Behälter 16 verbunden, der seinerseits über die Leitung 17 mit dem Klärbehälter 1 verbunden ist. Der permeatseitige Ausgang der Membranfiltereinheit 18 ist mit der von dem Membranfilter 8 kommenden das Klarwasser führenden Abführleitung 14 verbunden. Von der Konzentratleitung 21 ist eine Umwälzleitung 22 zu dem Eingang der Membranfiltereinheit 18 zurückgeführt. In der Umwälzleitung 22 ist eine Umwälzpumpe 23 angeordnet.

Die Pumpe 20 und die Umwälzpumpe 23 sind über Meßfühler ansteuerbar, die auf die Qualität des zu behandelnden Filterückspülwassers und den Füllstand des Klärbehälters ansprechen. So kann eine Füllstandstandssonde 24 in den Klärbehälter 1 hineinragen. In der zu der Membranfiltereinheit 18 führenden Leitung 19 kann ein Meßfühler 25 angeordnet sein, der die Trübung, das Redoxpotential oder das Zetapotential der angesaugten Flüssigkeit bestimmt.
Ferner kann eine Zeitschaltuhr vorhanden und in der zu der Membranfiltereinheit 18 führenden Leitung 19 ein Volumenstrommesser vorgesehen sein.

Die in der Fig. 2 dargestellten Ausführungsform unterscheidet sich von der nach Fig. 1 dadurch, daß die Umwälzleitung 22 und die Umwälzpumpe 23 durch eine zweite Leitung 26 mit einer zweiten Pumpe 27 ersetzt sind, und dadurch, daß die Konzentratleitung 21 in den Klärbehälter 1 geführt ist. In dem Klärbehälter 1 ist ein getauchtes Membranfilter 8 angeordnet.

Die kombinierte Anordnung des getauchten Membranfilters 8 und der separaten Membranfiltereinheit 18 hat Vorteile, wenn das Sedimentationsverhalten im Klärbecken nicht konstant oder nicht vorhersagbar ist. Das getauchte Membranfilter 8 wird zur Aufbereitung und Aufkonzentrierung des Sedimentes verwendet. Die separate Membranfiltereinheit 18 dient als Hochleistungsmembranstufe zur schnellen und effizienten Reinigung der Klarwasserphase nach kurzer Sedimentationszeit, bzw. in Abhängigkeit von der vorhandenen Trübung der Klarwasserphase.

Die Steuerung der Anlage erfolgt einerseits mit Hilfe des Füllstandes in dem Klärbehälter 1, der über den Betrieb der Membranfiltereinheit 18 entscheidet und die Eindickstufe mit dem getauchten Membranfilter 8 bei minimalem Niveau abschaltet. Andererseits kann die Steuerung der Anlage zusätzlich über eine Messung der Trübung, des Feststoffgehaltes, des Redoxpotentiales, des Zetapotentiales o.ä. erfolgen, die entscheidet, ob die Membranfiltereinheit 18 im Dead-End Modus oder im Cross-Flow Betrieb gefahren wird. Die Eindickstufe kann sofort mit Überschreiten eines minimalen Niveaus im Speicherbehälter gestartet werden. Nach kurzer Sedimentationszeit nimmt die Membranfiltereinheit 18 ihren Betrieb auf, der bis zu einem bestimmten Grenzwert der Wasserbelastung im Dead-End Modus erfolgt und periodisch die Membranen abreinigt, wobei das abgeschlämmte Konzentrat in die Eindickstufe gefahren wird. Steigt die Trübung in der Klarwasserphase an, und ist ein voreingestellter minimaler Füllstand noch nicht erreicht, so kann die Membranfiltereinheit 18 auf den Cross-Flow Betrieb umschalten. In diesem Fall wird die Umwälzpumpe 23 zugeschaltet, die eine hohe Überströmgeschwindigkeit entlang der Membranen der Membranfiltereinheit 18 erzeugt und diese auch bei höherer Feststoffbelastung auf einem hohen Leistungsniveau hält. Die hier erfolgende Abschlämmung eingedickter Schmutzstoffe erfolgt ebenfalls in die Eindickstufe hinein. Es ist auch möglich im großen Kreislauf in den Klärbehälter 1 abzuschlämmen (Fig. 2). Sobald ein Mindestfüllstand in dem Klärbehälter 1 erreicht ist, schaltet die Membranfiltereinheit 18 ab und allein die Eindickstufe wird den Klärbehälter 1 bis zum absolut niedrigsten Niveau abarbeiten, um dann ebenfalls abzuschalten.

## Patentansprüche

1. Verfahren zum Rückspülen von Filteranlagen zur Reinigung von Trinkwasser oder Abwasser, bei dem Filterrückspülwasser einem Klärbehälter (1) zugeführt wird und in dem Klärbehälter (1) in eine wäßrige und eine die Rückstände aus der Filteranlage enthaltende sedimentierte Phase zerlegt wird, **dadurch gekennzeichnet,**
**daß** die wäßrige Phase des Filterrückspülwassers aus dem Klärbehälter entnommen und zu einer oder mehreren separaten nicht getauchten druckbeaufschlagten Membranfiltereinheiten (18) gepumpt und in Permeat und Konzentrat zerlegt wird,
wobei das Permeat der Membranfiltereinheit (18) einem Verbraucher zugeführt und das Konzentrat eingedickt wird,
wobei zum Eindicken die Membranen eines Membranfilters (8) in das zu behandelnde Medium getaucht sind und eine Strömung entlang der Membranen erzeugt wird und in dem Membranfilter (8) das die Rückstände aus der Filteranlage enthaltende Konzentrat eingedickt wird.

2. Verfahren nach Anspruch 1, **dadurch gekennzeichnet, daß** zumindest ein Teil des Konzentrats zum Eindicken durch die separate Membranfiltereinheit (18) im Kreislauf geführt wird.

3. Verfahren nach Anspruch 1, **dadurch gekennzeichnet, daß** in Abhängigkeit von der Trübung, dem Redoxpotential oder dem Zetapotential der wäßrigen Phase, dem Volumenstrom des dem Klärbehälter (1) zugeführten Filterrückspülwassers, dem Füllstand des Klärbehälters (1) oder der Zeit die separate Membranfiltereinheit (18) und der eingetauchte Membranfilter (8) jeweils für sich allein oder gleichzeitig betrieben werden.

4. Verfahren nach den Ansprüchen 1 bis 3, **dadurch gekennzeichnet, daß** die separate Membranfiltereinheit (18) periodisch gespült und das dabei anfallende Konzentrat einer Eindickstufe zugeführt wird.

5. Verfahren nach den Ansprüchen 1 bis 4, **dadurch gekennzeichnet, daß** bei höherer Belastung die separate Membranfiltereinheit (18) mit einer erhöhten Überströmgeschwindigkeit entlang den Membranen betrieben wird, daß ein Teilstrom des Konzentrats im Kreislauf durch die separate Membranfiltereinheit (18) geführt und ein Teilstrom des Konzentrats einer Eindickstufe zugeführt wird.

6. Verfahren nach den Ansprüchen 1, 3 oder 4, **dadurch gekennzeichnet, daß** bei höherer Belastung die separate Membranfiltereinheit (18) mit einer erhöhten Überströmgeschwindigkeit entlang den Membranen betrieben und daß das Konzentrat im Kreislauf durch den Klärbehälter (1) geführt wird.

7. Verfahren nach einem der Ansprüche 1 bis 6, **dadurch gekennzeichnet, daß** das in dem getauchten Membranfilter (8) und/oder in der separaten Membranfiltereinheit (18) gewonnene Permeat direkt oder indirekt genutzt wird, indem es dem Reinwasser der Filteranlage zugegeben, als Filterrückspülwasser für die Filteranlage verwendet, oder vor der Filteranlage oder dem Rohwasser zugemischt wird.

8. Vorrichtung zur Aufbereitung von Filterrückspülwasser aus Filteranlagen zur Reinigung von Trinkwasser oder Abwasser, bestehend aus einem eine Absetzzone aufweisenden Klärbehälter (1) zur Aufnahme des Filterrückspülwassers, wobei Filterrückspülwasser aus einer Filteranlage in den Klärbehälter (1) leitbar ist, und wobei eine Einrichtung (19, 20, 28) vorgesehen ist, mit welcher die wäßrige Phase des Filterrückspülwassers aus dem Klärbehälter gepumpt wird, **dadurch gekennzeichnet,**
**daß** diese Einrichtung mit zumindest einer separaten nicht getauchten druckbeaufschlagten Membranfiltereinheit (18) verbunden ist, die Wickel-, Kapillar-, Platten- oder Rohrmodule mit freien Kanalöffnungen von 0,8 bis 6 mm bei einer Filterfeinheit von < = 0,4 µm enthalten,
**daß** zum Eindicken des Konzentrats der Membranfiltereinheit (18)
entweder in den Schlammsammelbereich (5) des Klärbehälters (1) die Membranen eines oder mehrerer Membranfilter (8), die Wickel-, Kapillar-, Platten- oder Rohrmodule mit freien Kanalöffnungen von 0,8 bis 6 mm bei einer Filterfeinheit von < = 0,4 µm enthalten, tauchbar angeordnet sind
oder die Membranen eines oder mehrerer Membranfilter (8), die Wickel-, Kapillar-, Plattenoder Rohrmodule mit freien Kanalöffnungen von 0,8 bis 6 mm bei einer Filterfeinheit von < = 0,4 µm enthalten, in einen getrennten Behälter (16) tauchbar angeordnet sind, wobei der Behälter (16) mit dem Absetzbereich (4) des Klärbehälters (1) über eine Leitung (17) verbunden ist.

9. Vorrichtung nach Anspruch 8, **dadurch gekennzeichnet, daß** die separate Membranfiltereinheit. (18) dem in dem getrennten Behälter (16) angeordneten Membranfilter (8) vorgeschaltet ist und deren Eingang über eine, eine Pumpe aufnehmende, Leitung mit dem Klärbehälter (1) oberhalb des Absetzbereiches (4) verbunden ist.

10. Vorrichtung nach Anspruch 8 und 9, **dadurch gekennzeichnet, daß** der für das Konzentrat vorgesehene Ausgang der separaten Membranfiltereinheit (18) über eine Konzentratleitung (21) mit dem getrennten Behälter (16) verbunden ist.

11. Vorrichtung nach den Ansprüchen 8 bis 10, **dadurch gekennzeichnet, daß** an den für das Konzentrat vorgesehenen Ausgang der separaten Membranfiltereinheit (18) zusätzlich eine Umwälzleitung (22) angeschlossen ist, die zu dem Eingang der separaten Membranfiltereinheit (18) zurückgeführt und in der eine Umwälzpumpe (23) angeordnet ist.

12. Vorrichtung nach Anspruch 8, **dadurch gekennzeichnet, daß** der für das Konzentrat vorgesehene Ausgang der separaten Membranfiltereinheit (18) über die Konzentratleitung (21) mit dem Klärbehälter (1) und der Eingang der separaten Membranfiltereinheit (18) über eine zweite eine Pumpe (27) aufnehmende Leitung (26) verbunden ist.

## Claims

1. A method for backwashing filtration plants for purifying drinking water or waste water, in which filter backwash water is fed to a treatment tank (1) and separated in the treatment tank (1) into an aqueous phase and a sedimented phase containing the residues from the filtration plant, **characterised in that** the aqueous phase of the filter backwash water is taken from the treatment tank and pumped to one or more separate, non-immersed, pressurised membrane filter units (18) and separated into permeate and concentrate, the permeate from the membrane filter unit (18) being fed to a consumer and the concentrate being thickened, the membranes of a membrane filter (8) being immersed in the medium to be treated for thickening same and a flow being generated along the membranes, and the concentrate containing the residues from the filtration plant being thickened in the membrane filter (8).

2. Method according to Claim 1, **characterised in that** at least a part of the concentrate is circulated through the separate membrane filter unit (18) for thickening.

3. Method according to Claim 1, **characterised in that**, depending on the cloudiness, the redox potential or the zeta potential of the aqueous phase, on the volumetric flow of the filter backwash water supplied to the treatment tank (1), on the level in the treatment tank (1) or on the time, the separate membrane filter unit (18) and the immersed membrane filter (8) are operated separately or simultaneously.

4. Method according to claims 1 to 3, **characterised in that** the separate membrane filter unit (18) is periodically flushed and that the concentrate dislodged thereby is fed to a thickening stage.

5. Method according to claims 1 to 4, **characterised in that** with high loading the separate membrane filter unit (18) is operated at an increased flow velocity along the membranes, **in that** a partial flow of concentrate is circulated through the separate membrane filter unit (18) and a partial flow of concentrate is fed to a thickening stage.

6. Method according to claims 1, 3 or 4, **characterised in that** with high loading the separate membrane filter unit (18) is operated with an increased flow velocity along the membranes and **in that** the concentrate is circulated through the treatment tank (1).

7. Method according to any one of claims 1 to 6, **characterised in that** the permeate obtained in the immersed membrane filter (8) and/or in the separate membrane filter unit (18) is utilised directly or indirectly by being added to the clean water of the filtration plant, by being used as filter backwash water for the filtration plant or by being admixed upstream of the filtration plant or added to the untreated water.

8. An apparatus for processing filter backwash water from filtration plants for the purification of drinking water or waste water, comprising a treatment tank (1) for receiving the filter backwash water and having a sedimentation zone, filter backwash water from a filtration plant being feedable into the treatment tank (1) and an arrangement (19, 20, 28) being provided by which the aqueous phase of the filter backwash water is pumped from the treatment tank, **characterised in that** said arrangement is connected to at least one separate, non-immersed, pressurised membrane filter unit (18) which contains coil, capillary, plate or tube modules having free channel openings of 0.8 to 6 mm and a filter fineness of <= 0.4 µm, **in that** for thickening of the concentrate of the membrane filter unit (18) either the membranes of one or more membrane filters (8) containing coil, capillary, plate or tube modules having free channel openings of 0.8 to 6 mm and a filter fineness of <= 0.4 µm are arranged to be immersible in the sludge collecting zone (5) of the treatment tank (1), or the membranes of one or more membrane filters (8) containing coil, capillary, plate or tube modules having free channel openings of 0.8 to 6 mm and a filter fineness of <= 0.4 µm are arranged to be immersible in a separate container (16), the container (16) being connected to the sedimentation zone (4) of the treatment tank (1) via a line (17).

9. Apparatus according to Claim 8, **characterised in that** the separate membrane filter unit (18) is disposed upstream of the membrane filter (8) arranged in the separate container (16) and the inlet of said separate membrane filter unit (18) is connected to the treatment tank (1) above the sedimentation zone (4) via a line including a pump.

10. Apparatus according to claims 8 and 9, **characterised in that** the outlet of the separate membrane filter unit (18) provided for the concentrate is connected to the separate container (16) via a concentrate line (21).

11. Apparatus according to claims 8 to 10, **characterised in that** a circulation line (22) which leads back to the inlet of the separate membrane filter unit (18) and in which a circulation pump (23) is arranged is additionally connected to the outlet of the separate membrane filter unit (18) provided for the concentrate.

12. Apparatus according to Claim 8, **characterised in that** the outlet of the separate membrane filter unit (18) provided for the concentrate is connected to the treatment tank (1) via the concentrate line (21) and the inlet of the separate membrane filter unit (18) is connected to the treatment tank (1) via a line (26) including a second pump (27).

## Revendications

1. Procédé pour laver à contre-courant une installation de filtration fournissant de l'eau potable ou traitant des eaux usées, dans lequel l'eau utilisée pour le lavage à contre-courant du filtre est dirigée sur une installation de clarification (1), pour être séparée dans cette installation de clarification (1) en une phase aqueuse et en une phase de sédimentation contenant les résidus de l'installation de filtration, **caractérisé en ce que**
la phase aqueuse provenant de l'eau de lavage à contre-courant du filtre est soutirée de l'installation de clarification et pompée vers une ou plusieurs unités (18) de filtration à membranes, qui sont séparées, qui ne sont pas immergées et qui fonctionnent sous pression, où elle est fractionnée en perméat et en concentrat,
où le perméat de l'unité (18) de filtration à membranes est dirigée sur un utilisateur et le concentrat est épaissi, et
où, pour assurer l'épaississement, les membranes d'un filtre (8) à membranes sont immergées dans le milieu à traiter, un flux est produit le long des membranes et le concentrat contenant les résidus de l'installation de filtration est épaissi dans le filtre (8) à membranes.

2. Procédé selon la revendication 1, **caractérisé en ce qu'**au moins une partie du concentrat à épaissir est recyclée dans l'unité (18) de filtration à membranes, qui est séparée.

3. Procédé selon la revendication 1, **caractérisé en ce que** l'unité (18) de filtration à membranes, qui est séparée, et le filtre immergé (8) à membranes fonctionnent soit l'un, soit l'autre, soit encore simultanément, selon le trouble de la phase aqueuse, son potentiel redox ou son potentiel zêta, selon le débit volumique de l'eau de lavage à contre-courant du filtre arrivant à l'installation de clarification (1), selon le niveau de remplissage de l'installation de décantation (1) ou selon l'heure.

4. Procédé selon les revendications 1 à 3, **caractérisé en ce que** l'unité (18) de filtration à membranes, qui est séparée, est lavée de manière périodique et **en ce que** le concentrat produit est épaissi.

5. Procédé selon les revendications 1 à 4, **caractérisé en ce que**, dans le cas d'une augmentation de la charge, l'unité (18) de filtration à membranes, qui est séparée, est alimentée avec une vitesse plus élevée du flux le long des membranes, une partie du flux du concentrat est re-circulée dans l'unité (18) de filtration à membranes, qui est séparée, et une partie du flux du concentrat subit un épaississement.

6. Procédé selon les revendications 1, 3 ou 4, caactérisé en ce que, dans le cas d'une augmentation de la charge, l'unité (18) de filtration à membranes, qui est séparée, est alimentée avec une vitesse plus élevée du flux le long des membranes et le concentrat est re-circulé par l'installation de clarification (1).

7. Procédé selon l'une des revendications 1 à 6, **caractérisé en ce que** le perméat obtenu du filtre immergé (8) à membranes et / ou de l'unité (18) de filtration à membranes, qui est séparée, est utilisé directement ou indirectement, ajouté à l'eau purifiée par l'installation de filtration, utilisé en tant qu'eau de lavage à contre-courant du filtre, utilisé pour alimenter l'installation de filtration ou injecté dans l'eau brute.

8. Dispositif pour traiter l'eau de lavage à contre-courant d'une installation de filtration fournissant de l'eau potable ou traitant des eaux usées et comportant une installation de clarification (1) présentant une zone de sédimentation, pour recueillir l'eau de lavage à contre-courant du filtre, où l'eau de lavage à contre-courant du filtre peut être acheminée depuis une installation de filtration vers l'installation de clarification (1) et où une installation (19, 20, 28) est prévue, grâce à laquelle la phase aqueuse de l'eau de lavage à contre-courant du filtre est pompée hors de l'installation de clarification, **caractérisé en ce que**,
cette installation co-opère avec au moins une unité (18) de filtration à membranes, qui est séparée, qui n'est pas immergée, qui est sous pression et qui comporte des modules à enroulements, à capillaires, à plaques ou à tubes avec des canaux ayant une ouverture libre de 0,8 à 6 mm, et permettant de filtrer les particules > / = 0,4 µm, **en ce que**, pour épaissir le concentrat de l'unité (18) de filtration à membranes, on prévoit
soit, dans la région (5) de collecte des boues de l'installation de clarification (1), des membranes d'un ou de plusieurs filtres (8) à membranes comportant des modules à enroulements, à capillaires, à plaques ou à tubes avec des canaux ayant une ouverture libre de 0,8 à 6 mm, et permettant de filtrer les particules > / = 0,4 µm, ces membranes étant agencées de manière à pouvoir être immergées,
soit des membranes d'un ou de plusieurs filtres (8) à membranes comportant des modules à enroulements, à capillaires, à plaques ou tubes avec des canaux ayant une ouverture libre de 0,8 à 6 mm, et permettant de filtrer les particules > / = 0,4 µm, ces membranes étant disposées dans un récipient séparé (16) de manière à pouvoir être immergées et le récipient (16) étant en communication avec la région de sédimentation (4) de l'installation de clarification (1) par une conduite (17).

9. Dispositif selon la revendication 8, **caractérisé en ce que** l'unité (18) de filtration à membranes, qui est séparée, est en amont du filtre (8) à membranes agencé dans le récipient séparé (16) et **en ce que** son entrée est en communication par une conduite comportant une pompe avec l'installation de clarification (1), au-dessus de la région de sédimentation (4).

10. Dispositif selon la revendication 8 et la revendication 9, **caractérisé en ce que** la sortie prévue pour le concentrat de l'unité (18) de filtration à membranes, qui est séparée, est en communication par une conduite à concentrat (21) avec le récipient séparé (16).

11. Dispositif selon les revendications 8 à 10, **caractérisé en ce qu'**à la sortie prévue pour le concentrat de l'unité (18) de filtration à membranes, qui est séparée, on prévoit en outre une conduite de re-circulation (22) qui retourne à l'entrée de l'unité (18) de filtration à membranes, qui est séparée et sur laquelle est montée une pompe de re-circulation (23).

12. Dispositif selon la revendication 8, **caractérisé en ce que** la sortie prévue pour le concentrat de l'unité (18) de filtration à membranes, qui est séparée, est en communication par la conduite (21) à concentrai avec l'installation de clarification (1) et l'entrée de l'unité (18) de filtration à membranes, qui est séparée, est en communication par une seconde conduite d'évacuation (26), comportant une pompe (27) avec l'installation de clarification (1).
